# EUROPEAN PATENT SPECIFICATION

(11) **EP 1 536 208 B1**
(45) Date of publication and mention of the grant of the patent: **05.04.2017**
(21) Application number: 04025206.6
(22) Date of filing: 22.10.2004
(51) Int. Cl.: G01D 3/024, G01D 7/02

(54) **Engine speed indicator for boats with switchable display modes**
Drehzahlmesser für Bootsmotoren mit schaltbaren Anzeigemodi
Indicateur de vitesse de moteur pour bateau avec modes d'affichage commutables

(30) Priority: 27.11.2003 JP 2003396639
(43) Date of publication of application: 01.06.2005
(73) Proprietor: Yamaha Hatsudoki Kabushiki Kaisha, Shizuoka-ken Shizuoka 438-8501 (JP)
(72) Inventor: Kawanishi, Masaru, Hamamatsu-shi Shizuoka-ken (JP)
(74) Representative: Grünecker Patent- und Rechtsanwälte PartG mbB

(56) References cited:
- DE-A1- 4 441 745
- US-A- 4 352 062
- US-A- 4 470 011
- US-A- 4 836 809
- US-A- 6 109 986
- PATENT ABSTRACTS OF JAPAN vol. 1997, no. 05 30 May 1997 & JP 09 005 121 A (MORIYAMA KOGYO KK) 10 January 1997

## Description

The invention relates to a boat indicator comprising an engine speed indicating section. Further, the invention relates to a boat having a hull and at least one engine.

Prior art document US 6,109,986 discloses an idle speed control system for a marine propulsion system that controls the amount of fuel injected into the combustion chamber of an engine cylinder as a function of the error between a selected target speed and an actual speed. The speed can be engine speed measured in revolutions per minute or, alternatively, it can be boat speed measured in nautical miles per hour or kilometers per hour. By comparing target speed to actual speed, the control system selects an appropriate pulse with length for the injection of fuel into the combustion chamber and regulates the speed by increasing or decreasing the pulse width. Said system comprises a mode button that can be used to select various different displays for the LCD area. In addition, the mode button can be used to select an operating option which places the engine control unit in a constant RPM mode. The magnitude of the constant RPM value can be set by using the ± buttons.

A conventional boat having an outboard motor or the like is provided with a boat indicator for indicating engine speed. The boat indicator can indicate engine speed of approximately 100rpm or higher (or the number with hundred's place or greater) with low display resolution in order for a user to read the engine speed at a glance.

Some boats are configured to run in a normal (high-speed) mode and, additionally, in a trolling mode at a low speed. The trolling mode which is used, e.g. while fishing, is a specific mode unique to boats and not used at other types of vehicles.

The setting of the engine speed in the trolling running covers more precise preset values compared to those indicated by the display resolution. However, the conventional indicator has a fixed display resolution which can only indicate engine speed equal to or higher than approximately 100 rpm. It is therefore difficult for a user to identify if the engine speed shown by the indicator is close to the preset engine speed.

A boat indicator having a display assembly that indicates the engine shaft speed and also indicates whether the boat is in the cruise mode or in the troll mode can be taken, for example, from prior art document US 4,836,809.

Furthermore, prior art document US 4,470,011 generally teaches a display means for a vehicle having an engine speed display that can be switched between a first and second mode according to the respective engine speed. In particular, said display switches between an idle mode and a normal mode, wherein in the idle mode the display is expanded such that an expanded scale is displayed. In the normal mode normal scale is displayed. Accordingly to said prior art, the expanded scale display differs from the normal scale display in resolution of the indication, such that an idling display indicator is provided when the expanded scale display mode is activated so that the operator can clearly realize the respective mode and the resolution of indication.

Prior art document US 4,352,062 discloses a digital display type tachometer for an automobile for numerically displaying a rotation speed of the engine. Said tachometer comprises a numeric character display device having display sections for 1000's, 100's, 10's and 1's digits, the 1's digit display section being constructed to display always "0", a counter for counting pulses generated in synchronism with the rotations of the engine to produce a BCD signal depending on the rotation speed, and decoding/driver means for decoding the BCD signal into decimal numeric character signals for 1000's, 100's and 10's digits and driving the 1000's, 100's, and 10's digit display sections by these character signals, respectively. The digital display type tachometer further comprises means for detecting whether the rotation speed of the engine is higher than 1000 rpm and producing a detection signal when the rotation speed is higher than 1000 rpm and means for controlling in response to said detection signal the 10's digit display section to display "0", whereby when the rotation speed of the engine is higher than 1000 rpm the rotation speed of the engine is displayed only with 1000's and 100's digits, while when the rotation speed of the engine is lower than 1000 rpm, the rotation speed is displayed with 100's and 10's digits.

It is an object of the present invention to provide an improved boat indicator which allows a user to easily read and, more precisely, recognize engine speeds of the boat at any running state. Besides, it is an object of the invention to improve a boat of the above kind for being controllable more accurately.

For a boat indicator of the above kind, this object is solved **by boat indicator having the features of independent claim 1. Preferred embodiments are laid down in the dependent claims.**

Thus, in the trolling running, the preset value of the engine speed is displayed at the level of lower speed range. This allows a driver to identify if the engine speed shown by the indicator is close to the preset engine speed. The engine speed indicating section does not display velocities and others but does only engine speeds in normal mode or trolling mode. This enables the driver to easily recognize them.

Preferably, the engine speed indicating section is configured to indicate the engine speed in the normal-speed mode with a first resolution and to indicate the engine speed in the low-speed trolling mode with a second resolution at a level of a lower speed range than the first resolution.

Further, preferably an engine condition indicating section is provided, preferably being arranged next to the engine speed indicating section, said engine condition indicating section being adapted to switch display modes, in particular according to the running mode selection.

Furthermore, preferably said engine condition indicating section is adapted to indicate texts, values and/or levels for at least one parameter or mode, in particular regarding an engine condition such as a cooling water temperature, a residual battery capacity, a battery voltage, a water accumulation amount, an oil pressure, an oil amount, and/or an engine speed.

Still further, preferably said engine condition indicating section is adapted to indicate an engine condition during a normal-speed running mode and/or to indicate an engine speed during the low-speed trolling mode.

Moreover, preferably said engine condition indicating section is adapted to indicate an engine condition indication mark, an engine condition range, and/or an engine condition value during a normal-speed running mode.

Also, preferably said engine condition indicating section is adapted to indicate a trolling mode display for indicating that the trolling mode is currently selected and/or the preset trolling engine speed during the low-speed trolling mode.

According to a preferred embodiment, the boat indicator comprises a mode selection switch for switching the running mode between the trolling mode and the normal mode.

According to a furthermore preferred embodiment, the boat indicator is connected to a further boat indicator, preferably via a local area network, the boat indicator being configured in that a change of the running mode selection performed at the boat indicator causes an automatic and corresponding change of the running mode selection at the further boat indicator.

For a boat of the above kind, the object is solved in an inventive manner in that it comprises a boat indicator according to at least one of the claims 1 to 10.

Therefore, since the reader can more easily read the engine speeds, the boat is controllable more accurately.

Further preferred embodiments are subject to the respective subclaims.

In the following, the invention will be described in greater detail by means of preferred embodiments thereof with reference to the attached drawings, wherein:
- FIG. 1: is a perspective view showing a boat according to an embodiment of the present **teaching**;
- FIG. 2: is a block diagram of an indicator and the like according to the embodiment;
- FIG. 3: is a front view showing the indicator according to the embodiment;
- FIG. 4: is a front view showing the indicator according to the embodiment in normal mode;
- FIG. 5: is a front view showing the indicator according to the embodiment in trolling mode; and
- FIG. 6: is a block diagram equivalent to FIG. 2, which shows a modified embodiment.

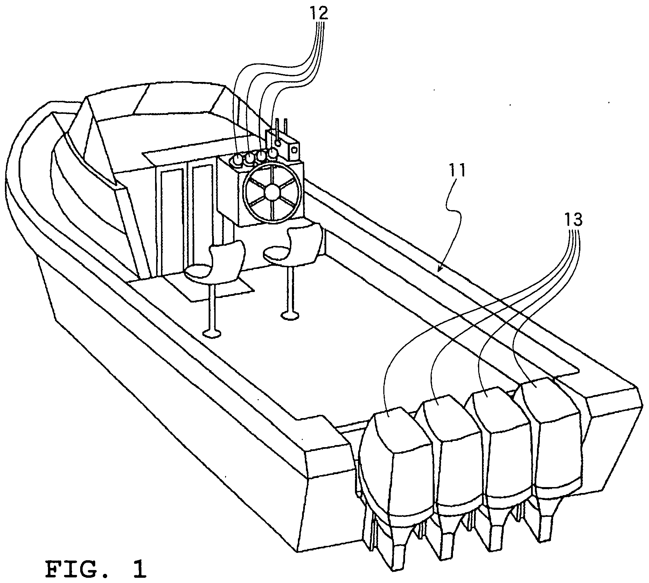

FIGs. 1 through 6 show embodiments of the present **teaching**.

In FIG. 1, a reference numeral 11 denotes a hull. In front of a driver's seat on the hull 11, four indicators 12 are disposed. The rear of the hull 11 is provided with four outboard motors 13. These multiple outboard motors 13 and indicators 12 are connected to each other via a Local Area Network (LAN).

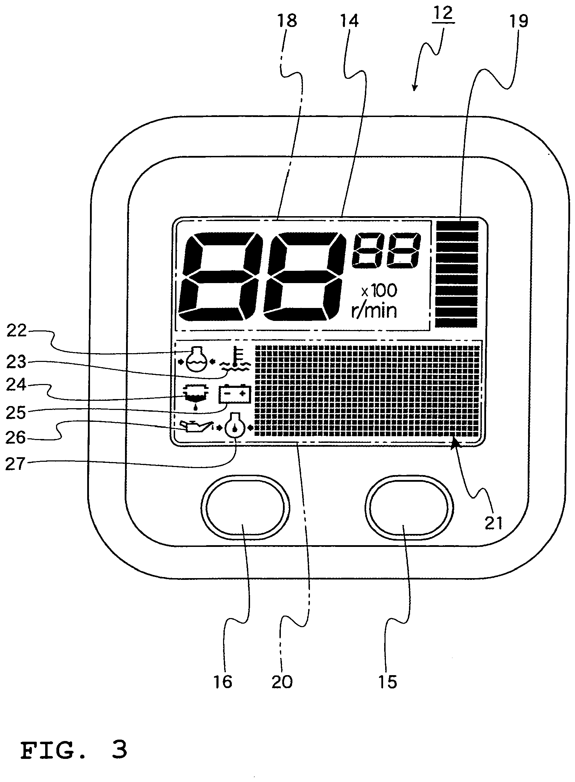

As shown in FIG. 3, each indicator 12 is provided with an indicating section 14 for indicating various data, such as engine speed and cooling water temperature, while a mode selection switch 15 and a setting switch 16 are provided below the indicating section 14. The mode selection switch 15 allows switching the running mode between low-speed trolling mode and normal mode at a speed higher than the trolling mode. These mode selection switch 15 and setting switch 16 also allow changing of the preset trolling engine speed, which are referred to as "engine-speed changing switches."

The indicating section 14 is roughly constructed of an engine speed indicating section 18 for indicating engine speed a trim position indicating section 19 for indicating trim position of the outboard motor 13, and an engine condition indicating section 20 for indicating the state of the trolling mode and cooling water temperature etc.

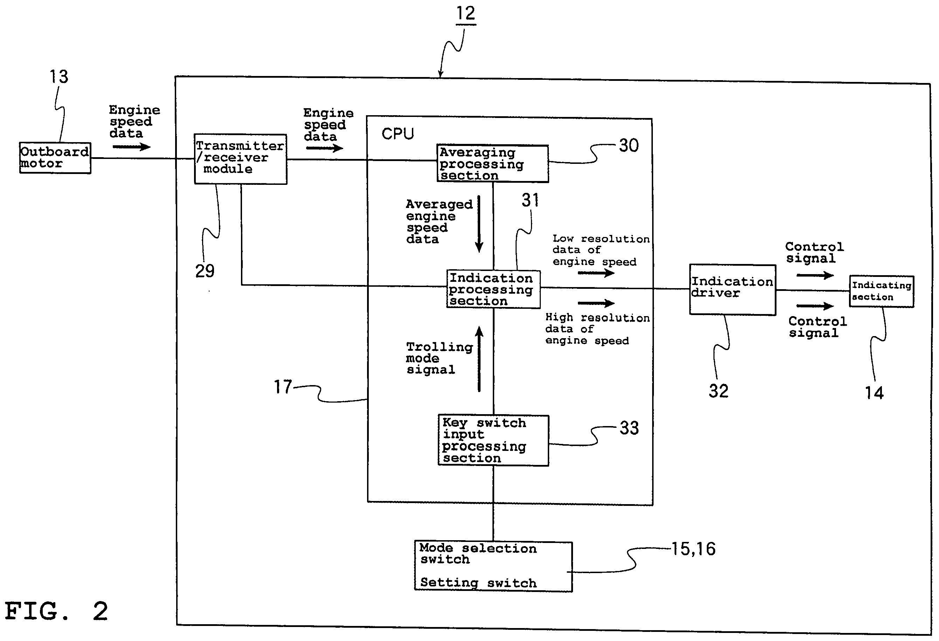

As shown in FIG. 2, the indicating section 14 and the switches 15, 16 are connected to and controlled by a central processing unit (hereinafter referred to as "CPU") 17 as will be described below.

To be specific, to keep pressing the mode selection switch 15 for a predetermined period of time (1.5 seconds) allows transmitting of a mode selection signal to the outboard motor 13 through the CPU 17 to set the running mode at the low-speed trolling mode. In turn, to keep pressing the mode selection switch 15 allows transmitting of a mode selection signal to the outboard motor 13 through the CPU 17 to switch the trolling mode to normal mode for higher-speed running.

The engine speed in trolling mode is adjusted on the outboard motor 13 by controlling an idle speed control (ISC) valve.

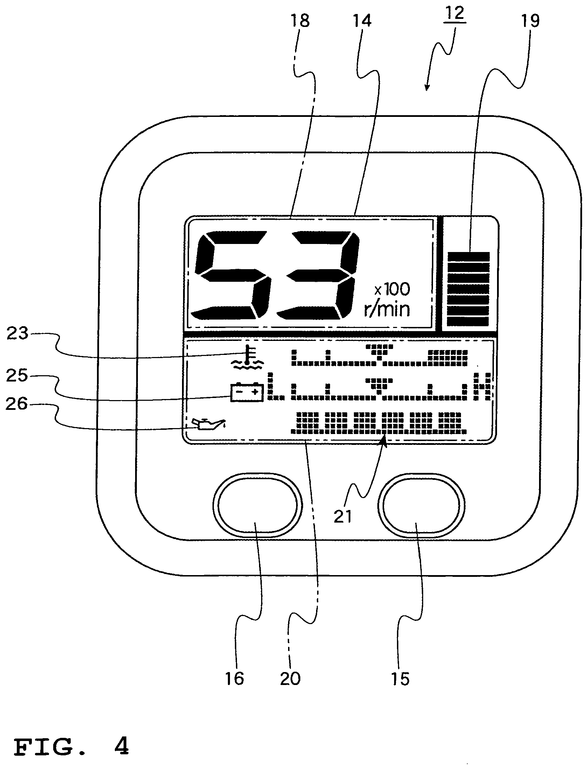

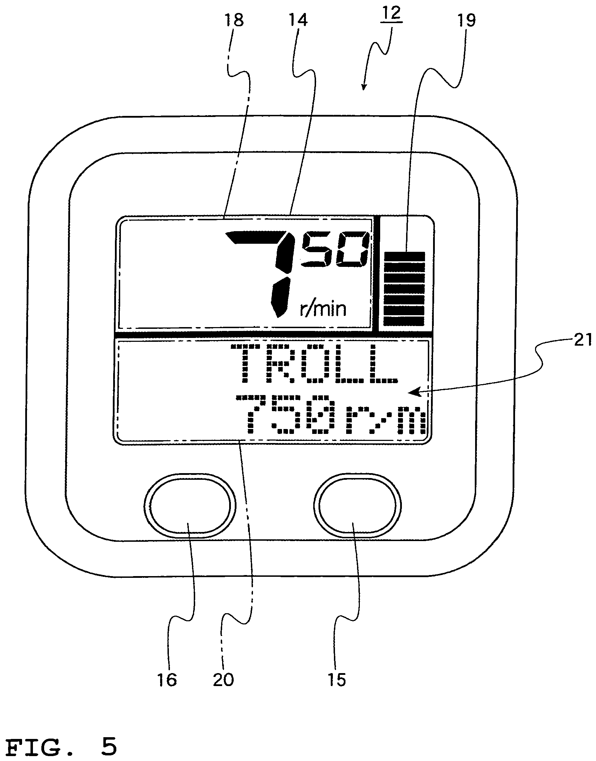

The engine speed indicating section 18 is designed to switch display modes, according to the running mode selection, between the normal mode display for indicating the engine speed in normal mode (See FIG. 4) and the trolling mode display for indicating the low engine speed in trolling mode (See FIG. 5).

The normal mode display on the engine speed indicating section 18 indicates engine speed detected with a first resolution (1(×100r/min)). To be more specific, the engine revolution speed per minute is indicated as a value having a number in the hundred's place or a larger-place value (in a range between 0 and 99 (×100 r/min)). For example, [53×100r/min] is indicated as shown in FIG. 4.

The trolling mode display on the engine speed indicating section 18 indicates engine speed detected with a second resolution (50(r/min)) at the level of lower speed range than the first resolution. To be more specific, the engine revolution speed per minute is indicated as a value having a number in the one's place or a larger place value (in a range between 000 and 999 (r/min)). For example, [750 r/min] is indicated as shown in FIG. 5.

In contrast, the trim position indicating section 19, formed next to the engine speed indicating section 18, is designed to indicate a trim position and trim tab position at one of the 10 position levels.

As shown in FIG. 3, the engine condition indicating section 20 is provided with a multi-indication section 21 on which values for various parameters, levels and texts are indicated. The engine condition indicating section 20 provides a water pressure mark 22 which is indicated on selecting the water pressure mode and flashes at abnormally low cooling water temperature; a water temperature mark 23 which is indicated on selecting the water temperature mode and flashes at abnormally high water temperature; a water accumulation mark 24 which flashes when water accumulation is detected in a fuel filter; a voltage mark 25 which is indicated on selecting the electric voltage mode and flashes at abnormally low battery voltage; an oil amount mark 26 designed for two-stroke engines which is indicated on selecting the oil amount mode and flashes at low amount of oil; and an oil pressure mark 27 designed for four-stroke engines which is indicated on selecting the oil pressure mode and flashes at abnormally low oil pressure.

The engine condition indicating section 20 is designed to switch display modes, according to the running mode selection, between the normal mode display for indicating cooling water temperature, residual battery capacity and the like in normal mode, and the trolling mode display for indicating that the trolling mode is currently selected, and the preset trolling engine speed in trolling mode.

For example as shown in FIG. 4, the normal mode display on the engine condition indicating section 20 provides the water temperature mark 23, the voltage mark 25 and the oil amount mark 26 while providing the cooling water temperature, residual battery capacity and oil amount in the multi-indication section 21.

The trolling mode display on the engine condition indicating section 20 indicates [TROLL 750r/m] in the multi-indication section 21, for example as shown in FIG. 5.

The preset trolling engine speed in trolling mode is designed to be variable so that it can increase by 50 rpm each time pressing the mode selection switch 15 for a predetermined period of time (not longer than 1.5 seconds) or decrease by 50 rpm each time pressing the setting switch 16 for a predetermined period of time (not longer than 1.5 seconds).

Effects of the present teaching are next described.

As for the engine driving conditions of the outboard motor 13, as shown in FIG. 2, engine speed data is transmitted from the outboard motor 13 to the indicator 12 through the LAN and then inputted to an averaging processing section 30 in the CPU 17 through a transmitter/receiver module 29 in the indicator 12. This averaged engine speed data is inputted to an indication processing section 31.

In normal mode, the indication processing section 31 processes the aforementioned engine speed data at low resolution (first resolution). This data is transmitted to an indication driver 32 from which a control signal is outputted to the indicating section 14.

The engine speed indicating section 18 in the indicating section 14 indicates [53×100r/min] for example as shown in FIG. 4.

In the indicating section 14, the engine condition indicating section 20 indicates the water temperature mark 23, the voltage mark 25 and the oil amount mark 26 while the multi-indication section 21 indicates the cooling water temperature, residual battery capacity and oil amount.

In contrast, operating the mode selection switch 15 to switch to the trolling mode allows inputting a trolling mode signal to the indication processing section 31 through a key switch input processing section 33. The indication processing section 31 is therefore switched to processing at high resolution (second resolution).

The engine speed data processed at high resolution is transmitted to an indication driver 32 from which a control signal is outputted to the indicating section 14.

The engine speed indicating section 18 in the indicating section 14 indicates [750r/min] for example as shown in FIG. 5.

The engine condition indicating section 20 in the indicating section 14 is switched to the trolling mode display and then indicates [TROLL 750r/m] as shown in FIG. 5 for example.

According to these switching operations between normal mode and trolling mode, resolution at which the engine speed data is processed is changed, and the display mode of the engine speed indicating section 18 is switched. The trolling mode display indicates engine speeds lower than those shown on the normal mode display. Based on these indicated values, a driver can appropriately control the lower engine speed in trolling mode. This allows adjusting the running speed in trolling mode to a desirable speed, which can lead to more successful fishing.

The engine speed indicating section 18 does not display velocities and others but does only engine speeds in normal mode or trolling mode. This enables the driver to easily recognize them.

Furthermore, no numbers in the ten's and one's places, which indicates low engine speed range, are flashed on the engine speed indicating section 18 in normal mode. This is because momentary visibility of the engine speed indicated at the level of low speed range becomes low in normal mode. In other words, more digits displayed, lower visibility, respectively recognizability, and the lowest two-digit numbers constantly change indeed. This makes it difficult for the driver to read them.

Furthermore, the engine condition indicating section 20 is designed to switch display modes, according to each mode selection, between the normal mode display for indicating the cooling water temperature, battery residual capacity and the like in normal mode, and the trolling mode display for indicating that the trolling mode is currently selected and the preset trolling engine speed in trolling mode. Viewing these displays allows the driver to easily recognize the current mode. In addition, indicating the preset trolling engine speed allows the driver to easily recognize the current preset engine speed. Furthermore, the driver can easily compare this current preset engine speed with the actual engine speed so that the driver can make sure if the engine is in operation at the preset value.

The indicator 12 has the mode selection switch 15 for switching running mode between trolling mode and normal mode. This allows the driver to easily switch the running mode using this switch 15 while viewing the indicating section 14.

The indicator has not only the mode selection switch 15, but also the setting switch 16, in order to change the preset trolling engine speed in trolling mode. This allows the driver to easily change the preset trolling engine speed using these switches 15, 16, while viewing the indicating section 14, as required depending on the circumstances, such as wave, wind and type of target fish.

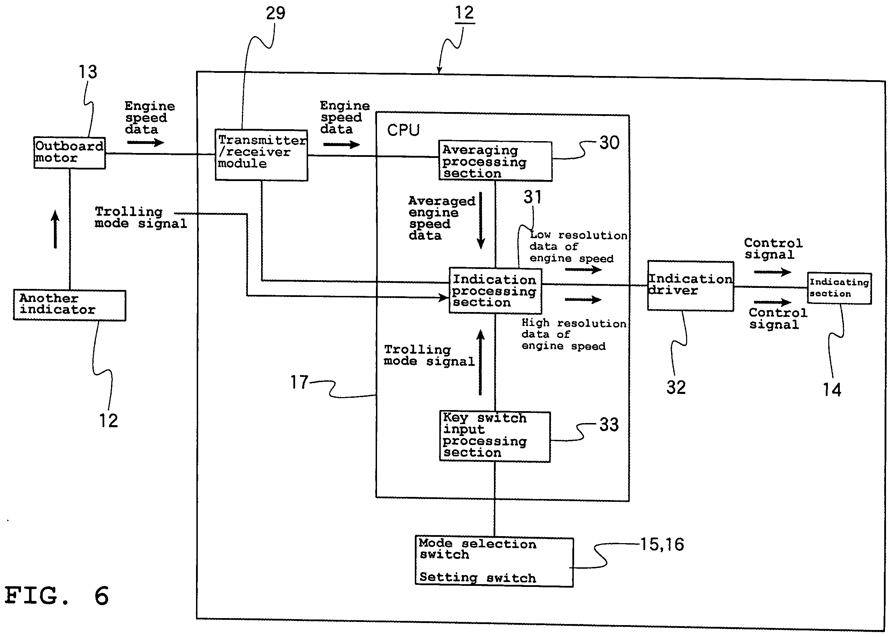

Another embodiment may be formed in which multiple outboard motors 13 and the corresponding multiple indicators 12 are provided as with the aforementioned embodiment, and setting one of the indicators 12 to trolling mode allows the other indicators, connected via the LAN, to also be set to trolling mode as shown in FIG. 6, which results in switching to low resolution display.

In such embodiment, only operating one of the mode selection switches 15 of the indicators 12 allows all the other indicators 12 and outboard motors 13 to be set to trolling mode, thereby substantially improving the operability.

The aforementioned embodiment is provided with four each of the indicators 12 and outboard motors 13. However, it should be understood that the present teaching shall not be limited to this, and one or two or more of those may be provided.

As described above, this **teaching** relates to a boat indicator comprising an engine speed indicating section for indicating engine speed, to be used for boats which can switch running mode between low-speed trolling mode and normal mode at a speed higher than the trolling mode.

In particular, a boat indicator is provided comprising an engine speed indicating section for indicating engine speed, to be used for boats which can switch running mode between low-speed trolling mode and normal mode at a speed higher than the trolling mode, wherein the engine speed indicating section is adapted to switch display modes, according to the running mode selection, between the normal mode display for indicating the engine speed in the normal mode and the trolling mode display for indicating engine speed in the trolling mode; and the normal mode display indicates engine speed detected with a first resolution while the trolling mode display indicates engine speed detected with a second resolution at the level of lower speed range than the first resolution.

Therein, preferably an engine condition indicating section is provided next to the engine speed indicating section, said engine condition indicating section being adapted to switch display modes, according to the running mode selection, between the normal mode display for indicating cooling water temperature, residual battery capacity and the like in the normal mode, and the trolling mode display for indicating that the trolling mode is currently selected, and the preset trolling engine speed in the trolling mode.

Further, preferably the boat indicator comprises a mode selection switch for switching running mode between the trolling mode and the normal mode.

Furthermore, preferably the boat indicator comprises an engine-speed changing switch for changing a preset trolling engine speed in the trolling mode.

Accordingly, the engine speed indicating section is preferably adapted to switch display modes, according to the running mode selection, between the normal mode display for indicating the engine speed in normal mode and the trolling mode display for indicating engine speed in trolling mode; and the normal mode display indicates engine speed detected with a first resolution while the trolling mode display indicates engine speed detected with a second resolution at the level of lower speed range than the first resolution. Thus, in the trolling running, the preset value of the engine speed is displayed at the level of lower speed range. This allows a driver to identify if the engine speed shown by the indicator is close to the preset engine speed. The engine speed indicating section does not display velocities and others but does only engine speeds in normal mode or trolling mode. This enables the driver to easily recognize them.

Moreover, the engine condition indicating section is preferably provided next to the engine speed indicating section, said engine condition indicating section being adapted to switch display modes, according to each mode selection, between the normal mode display for indicating the cooling water temperature, battery residual capacity and the like in normal mode, and the trolling mode display for indicating that the trolling mode is currently selected and the preset trolling engine speed in trolling mode. Viewing these displays allows the driver to easily recognize the current mode. In addition, indicating the preset trolling engine speed allows the driver to easily recognize the current preset engine speed. Furthermore, the driver can easily compare this current preset engine speed with the actual engine speed so that the driver can make sure if the engine is in operation at the preset value.

Preferably, the indicator comprises the mode selection switch for switching running mode between the trolling mode and the normal mode. This allows the driver to easily switch the running mode using this switch while viewing the indicating section.

According to a further embodiment, the boat indicator comprises an engine-speed changing switch, in order to change the preset trolling engine speed in trolling mode. This allows the driver to easily change the preset trolling engine speed using the engine-speed changing switch, while viewing the indicating section, as required depending on the circumstances, such as wave, wind and type of target fish.

As described above, in order to provide a boat indicator which allows a user to easily read engine speeds, either which is relatively high in normal mode, or which is more precisely indicated in trolling mode, a boat indicator 12 is provided comprising an engine speed indicating section 18 for indicating engine speed, to be used for boats which can switch running mode between low-speed trolling mode and normal mode at a speed higher than the trolling mode, wherein the engine speed indicating section 18 is adapted to switch display modes, according to the running mode selection, between the normal mode display for indicating the engine speed in the normal mode and the trolling mode display for indicating engine speed in the trolling mode; and the normal mode display indicates engine speed detected with a first resolution while the trolling mode display indicates engine speed detected with a second resolution at the level of lower speed range than the first resolution.

## Claims

1. Boat indicator having an engine speed indicating section (18) comprising an engine-speed changing switch (16) for changing a preset trolling engine speed in the low-speed trolling mode, **characterized in that** the engine speed indicating section (18) is adapted to switch display modes between a first display mode for indicating an engine speed in a first resolution and for indicating said first resolution of the detected engine speed during a normal-speed mode and a second display mode for indicating an engine speed in a second resolution and for indicating said second resolution of the detected engine speed during a low-speed trolling mode, according to a running mode selection, wherein displaying of the resolution of the detected engine speed is switched with the switch of the display mode.

2. Boat indicator according to claim 1, **characterized in that** the engine speed indicating section (18) is configured to indicate the engine speed in the normal-speed mode with a first resolution and to indicate the engine speed in the low-speed trolling mode with a second resolution at a level of a lower speed range than the first resolution.

3. Boat indicator according to claim 1 or 2, **characterized in that** an engine condition indicating section (20) is provided, preferably being arranged next to the engine speed indicating section (18), said engine condition indicating section (20) being adapted to switch display modes, in particular according to the running mode selection.

4. Boat indicator according to claim 3, **characterized in that** said engine condition indicating section (20) is adapted to indicate texts, values and/or levels for at least one parameter or mode, in particular regarding an engine condition such as a cooling water temperature, a residual battery capacity, a battery voltage, a water accumulation amount, an oil pressure, an oil amount, and/or an engine speed.

5. Boat indicator according to claim 3 or 4, **characterized in that** said engine condition indicating section (20) is adapted to indicate an engine condition during a normal-speed running mode and/or to indicate an engine speed during the low-speed trolling mode.

6. Boat indicator according to at least one of the claims 3 to 5, **characterized in that** said engine condition indicating section (20) is adapted to indicate an engine condition indication mark (22-27), an engine condition range, and/or an engine condition value during a normal-speed running mode.

7. Boat indicator according to at least one of the claims 3 to 6, **characterized in that** said engine condition indicating section (20) is adapted to indicate a trolling mode display for indicating that the trolling mode is currently selected and/or the preset trolling engine speed during the low-speed trolling mode.

8. Boat indicator according to at least one of the claims 1 to 7, **characterized by** comprising a mode selection switch (15) for switching the running mode between the trolling mode and the normal mode.

9. Boat indicator according to at least one of the claims 1 to 8, **characterized by** being connected to a further boat indicator (12), preferably via a local area network, the boat indicator (12) being configured in that a change of the running mode selection performed at the boat indicator (12) causes an automatic and corresponding change of the running mode selection at the further boat indicator (12).

10. Boat having a hull (10) and at least one engine (13) **characterized by** a boat indicator according to at least one of the claims 1 to 9.

## Patentansprüche

1. Ein Boots-Anzeigegerät, das einen Motorgeschwindigkeits-Anzeigeabschnitt (18) hat, umfasst einen Motorgeschwindigkeits-Änderungs-Schalter (16) zur Änderung einer vorgegebenen Trolling-Motorgeschwindigkeit in einem Niedrig-Geschwindigkeits-Trolling-Modus, **dadurch gekennzeichnet, dass** der Motorgeschwindigkeits-Anzeigeabschnitt (18) angepasst ist, um Bildschirm-Modi zwischen einem ersten Bildschirm-Modus, zum Anzeigen einer Motorgeschwindigkeit in einer ersten Auflösung und zum Anzeigen dieser ersten Auflösung der erfassten Motorgeschwindigkeit während eines Normal-Geschwindigkeits-Modus, und einem zweiten Bildschirm-Modus, zum Anzeigen einer Motorgeschwindigkeit in einer zweiten Auflösung und zum Anzeigen dieser zweiten Auflösung der erfassten Motorgeschwindigkeit während eines Niedrig-Geschwindigkeits-Trolling-Modus, gemäß einer Fahr-Modus-Auswahl, zu schalten, wobei Anzeigen der Auflösung der erfassten Motorgeschwindigkeit mit dem Schalter des Bildschirm-Modus geschaltet ist.

2. Boots-Anzeigegerät gemäß Anspruch 1, **dadurch gekennzeichnet dass** der Motorgeschwindigkeits-Anzeigeabschnitt (18) konfiguriert ist um die Motorgeschwindigkeit in dem Normal-Geschwindigkeits-Modus mit einer ersten Auflösung anzuzeigen und die Motorgeschwindigkeit in den Niedrig-Geschwindigkeits-Trolling-Modus mit einer zweiten Auflösung anzuzeigen in einem Niveau eines niedrigen Geschwindigkeitsbereich als der ersten Auflösung.

3. Boots-Anzeigegerät gemäß Anspruch 1 oder 2, **dadurch gekennzeichnet, dass** ein Motor-Zustands-Anzeigeabschnitt (20) vorgesehen ist, vorzugsweise angeordnet als nächstes zu dem Motorgeschwindigkeits-Anzeigeabschnitt (18), dieser Motor-Zustands-Anzeigeabschnitt (20) ist angepasst um den Bildschirm-Modus zu schalten, insbesondere gemäß der Fahr-Modus-Auswahl.

4. Boots-Anzeigegerät gemäß Anspruch 3, **dadurch gekennzeichnet, dass** dieser Motor-Zustands-Anzeigeabschnitt (20) angepasst ist, Texte, Werte und/oder Pegel für zumindest einen Parameter oder Modus anzuzeigen, insbesondere bezüglich eines Motor-Zustands wie eine Kühlwassertemperatur, eine verbleibende Batteriekapazität, eine Batteriespannung, einem Wasseraufnahmebetrag, einem Öldruck, einer Ölmenge, und/oder einer Motorgeschwindigkeit.

5. Boots-Anzeigegerät gemäß Anspruch 3 oder 4, **dadurch gekennzeichnet, dass** dieser Motor-Zustands-Anzeigeabschnitt (20) angepasst ist, um einen Motor-Zustand während einem Normal-Geschwindigkeits-Fahr-Modus anzuzeigen und/oder eine Motorgeschwindigkeit während des Niedrig-Geschwindigkeits-Trolling-Modus anzuzeigen.

6. Boots-Anzeigegerät gemäß zumindest einem der Ansprüche 3 bis 5, **dadurch gekennzeichnet, dass** dieser Motor-Zustands-Anzeigeabschnitt (20) angepasst ist, um eine Motor-Zustands-Anzeigemarke (22-27), einen Motor-Zustands-Bereich, und/oder einen Motor-Zustands-Wert während eines Normal-Geschwindigkeits-Fahr-Modus anzuzeigen.

7. Boots-Anzeigegerät gemäß zumindest einem der Ansprüche 3 bis 6, **dadurch gekennzeichnet, dass** dieser Motor-Zustands-Anzeigeabschnitt (20) angepasst ist, um einen Trolling-Modus-Bildschirm zum Anzeigen, dass der Trolling-Modus momentan ausgewählt ist und/oder um die vorgegebenen Trolling-Motorgeschwindigkeit während des Niedrig-Geschwindigkeits-Trolling-Modus anzuzeigen.

8. Boots-Anzeigegerät gemäß zumindest einem der Ansprüche 1 bis 7, **gekennzeichnet durch** Umfassen eines Modus-Auswahlschalters (15) zum Schalten des Fahr-Modus zwischen dem Trolling-Modus und dem Normal-Modus.

9. Boots-Anzeigegerät gemäß zumindest einem der Ansprüche 1 bis 8, **gekennzeichnet durch** Verbundensein zu einem weiteren Boots-Anzeigegerät (12), vorzugsweise über ein lokales Netzwerk, das Boots-Anzeigegerät (12) ist konfiguriert derart, dass eine Änderung der Fahr-Modus-Auswahl, durchgeführt an dem Boots-Anzeigegerät (12), eine Automatik bewirkt und entsprechend die Fahr-Modus-Auswahl an dem weiteren Boots-Anzeigegerät (12) ändert.

10. Boot, das einen Rumpf (10) und zumindest einen Motor (13) hat, **gekennzeichnet durch** ein Boots-Anzeigegerät gemäß zumindest einem der Ansprüche 1 bis 9.

## Revendications

1. Indicateur de bateau comportant une section d'indication de régime moteur (18) comprenant un commutateur de changement de régime moteur (16) permettant de changer un régime prédéfini de moteur hors-bord dans le mode pêche à la traîne à faible vitesse, **caractérisé en ce que** la section d'indication de régime moteur (18) est conçue pour commuter des modes d'affichage entre un premier mode d'affichage permettant d'indiquer un régime moteur avec une première résolution et permettant d'indiquer ladite première résolution du régime moteur détecté pendant un mode de vitesse normale, et un second mode d'affichage permettant d'indiquer un régime moteur dans une seconde résolution et permettant d'indiquer ladite seconde résolution du régime moteur détecté pendant un mode pêche à faible vitesse, en fonction d'une sélection du mode d'allure, l'affichage de la résolution du régime moteur détecté étant commuté avec le basculement du mode d'affichage.

2. Indicateur de bateau selon la revendication 1, **caractérisé en ce que** la section d'indication de régime moteur (18) est configurée pour indiquer le régime moteur dans le mode de vitesse normale avec une première résolution et pour indiquer le régime moteur dans le mode pêche à faible vitesse avec une seconde résolution pour un niveau de plage de vitesse inférieure à celui de la première résolution.

3. Indicateur de bateau selon la revendication 1 ou la revendication 2, **caractérisé en ce qu'une** section d'indication d'état moteur (20) est prévue, en étant disposée de préférence à côté de la section d'indication de régime moteur (18), ladite section d'indication d'état moteur (20) étant conçue pour commuter les modes d'affichage, en particulier selon la sélection du mode d'allure.

4. Indicateur de bateau selon la revendication 3, **caractérisé en ce que** ladite section d'indication d'état moteur (20) est conçue pour indiquer des textes, des valeurs et/ou des niveaux pour au moins un paramètre ou un mode, concernant en particulier l'état moteur tel que la température de l'eau de refroidissement, la capacité résiduelle de la batterie, la tension de la batterie, la quantité d'accumulation d'eau, la pression d'huile, la quantité d'huile et/ou le régime moteur.

5. Indicateur de bateau selon la revendication 3 ou la revendication 4, **caractérisé en ce que** ladite section d'indication d'état moteur (20) est conçue pour indiquer l'état du moteur pendant le mode d'allure à vitesse normale et/ou pour indiquer le régime moteur pendant le mode pêche à faible vitesse.

6. Indicateur de bateau selon au moins l'une des revendications 3 à 5, **caractérisé en ce que** ladite section d'indication d'état moteur (20) est conçue pour montrer un marquage d'indication de l'état du moteur (22 à 27), une plage de l'état du moteur et/ou une valeur de l'état du moteur pendant le mode d'allure à vitesse normale.

7. Indicateur de bateau selon au moins l'une des revendications 3 à 6, **caractérisé en ce que** ladite section d'indication d'état moteur (20) est conçue pour montrer un affichage en mode pêche permettant d'indiquer que le mode pêche est actuellement sélectionné et/ou le régime moteur de pêche prédéfini pendant le mode pêche à faible vitesse.

8. Indicateur de bateau selon au moins l'une des revendications 1 à 7, **caractérisé en ce qu'il** comprend un commutateur de sélection de mode (15) permettant de basculer le mode d'allure entre le mode pêche et le mode normal.

9. Indicateur de bateau selon au moins l'une des revendications 1 à 8, **caractérisé en ce qu'il** est relié à un autre indicateur de bateau (12), de préférence par l'intermédiaire d'un réseau local, l'indicateur de bateau (12) étant configuré **en ce qu'**un changement de sélection du mode d'allure effectué au niveau de l'indicateur de bateau (12) amène une modification automatique correspondante de la sélection du mode d'allure au niveau de l'autre indicateur de bateau (12).

10. Bateau comportant une coque (10) et au moins un moteur thermique (13) **caractérisé par** un indicateur de bateau conforme à au moins l'une des revendications 1 à 9.
